# EUROPÄISCHE PATENTANMELDUNG

(11) **EP 1 103 875 A2**
(43) Veröffentlichungstag der Anmeldung: **30.05.2001**
(21) Anmeldenummer: 00890340.3
(22) Anmeldetag: 15.11.2000
(51) Int. Cl.: G05B 19/042

(54) **Benutzerabhängige Steuerung für medizinische Geräte**

(30) Priorität: 17.11.1999 AT 194499
(71) Anmelder: W & H Dentalwerk Bürmoss GmbH, 5111 Bürmoos (AT)
(72) Erfinder: Sevcik, Roland, Dipl.-Ing., 83435 Bad Reichenhall (DE); Fersterer, Johann, 5112 Lamprechtshausen (AT)
(74) Vertreter: Patentanwälte BARGER, PISO & PARTNER

(57) **Zusammenfassung**

Die Erfindung betrifft ein Verfahren zur Einstellung der Betriebsparameter eines mehreren Benutzern zur Verfügung stehenden medizinischen Arbeitsplatzes, wie beispielsweise eines dentalen Bearbeitungsstuhls

Die Erfindung ist dadurch gekennzeichnet, daß die Benutzer über einen jeweils ihnen zugeordneten externen Datenträger verfügen und der Arbeitsplatz über eine mit diesen Datenträgern kompatible Lesevorrichtung verfügt und daß die Betriebsparameter des jeweiligen Benutzers auf dem ihm zugeordneten Datenträger gespeichert sind und bei in das Lesegerät eingeführten Datenträger vom Arbeitsplatz erkennbar und aktivierbar sind.

## Beschreibung

Die Erfindung betrifft eine benutzerabhängige Steuerung für medizinische Geräte.

In Spitälern, Kliniken, Sanatorien, Gemeinschaftspraxen u.ähnl. medizinischen Institutionen werden zunehmend Geräte eingesetzt, deren Anschaffüngs- und Unterhaltskosten eine Höhe erreicht haben, die vor wenigen Jahren noch als unvorstellbar angesehen wurde. Es ist daher eine kategorische Forderung, daß diese Geräte intensiv benutzt werden, um die für den einzelnen Patienten anfallenden Kosten so gering wie möglich zu halten. Dies bedingt wiederum, daß ein solches Gerät, im folgenden Arbeitsplatz genannt, nicht nur von einem oder zwei Ärzten verwendet wird, sondern einer ganzen Reihe von Ärzten zur Verfügung steht.

Dies führt nun zu verschiedenen Schwierigkeiten, da es bei vielen derartigen Arbeitsplätzen durchaus üblich ist, daß zwar der Arbeitsplatz fix montiert und voreingestellt allen Benutzern zur Verfügung steht, daß diese aber Endinstrumente verwenden, die ihren persönlichen Vorlieben und Ausbildungen entsprechen, so daß der Arbeitsplatz in Abhängigkeit vom Benutzer mit unterschiedlichen Endwerkzeugen und mit unterschiedlichen Einstellungen verwendet wird.

Beispiele für derartige Situationen sind, um nur wenige zu nennen, dentale oder chirurgische Arbeitsplätze, bei denen Handstücke verwendet werden, die rotierende oder vibrierende Werkzeuge oder Laserwerkzeuge aufweisen, wobei die Rotation durch luftgetriebene Turbinen oder Elektromotoren bewirkt werden kann. Es werden solche Werkzeuge verwendet, um Zähne oder Knochen zu bearbeiten, um Implantate oder deren Verschlußschrauben einzuschrauben oder bei der Anbringung eines endgültigen Implantataufbaus wiederum zu lösen und es werden dafür eine Vielzahl von Werten für eine ganze Reihe von Betriebsparametern benötigt, die jeweils am Arbeitsplatz zur Verfügung stehen müssen.

Dies können beispielsweise Drehzahl, Drehmoment, Drehmomentverlauf, Menge und Zusammensetzung der Kühlflüssigkeit, Programmierung des Fußschalters, Betätigung einer zusätzlichen Absaugpumpe u.dgl. mehr sein.

Diese Parameter variieren natürlich je nach der vorzunehmenden Tätigkeit, aber nicht nur das, sie variieren auch in Abhängigkeit von den persönlich verwendeten Geräten und Vorlieben.

So wird beispielsweise das gelieferte Drehmoment von elektrisch angetriebenen Bohrern durch den Motorstrom bestimmt, doch ist die Abhängigkeit zwischen Drehmoment und Motorstrom von Handstück zu Handstück unterschiedlich. Dies gilt auf analoge Weise für praktisch alle der genannten und auch weitere hier nicht genannte Parameter.

Dies bedeutet, daß derartige einer Vielzahl von Benutzern zur Verfügung stehende Arbeitsplätze so programmierbar sein müssen, daß sie für jeden Benutzer alle Parameterkombinationen enthalten, die dieser häufig oder zumindest öfter verwendet und daß, entweder beginnend vom Scratch oder von einer dieser Kombinationen, der jeweilige Besucher noch adaptive Änderungen vornehmen kann.

Dieser Aufwand erscheint auf den ersten Blick nicht sehr groß, doch ist zu bedenken, daß gerade bei medizinischen Institutionen, die derartige Arbeitsplätze in Verwendung haben, mehrere und in vielen Fällen sogar viele derartige Arbeitsplätze bereit stehen, die alle von jedem der Benutzer verwendet werden können. Dies führt dazu, daß für jeden neu dazu kommenden Benutzer jeder einzelne Arbeitsplatz entsprechend programmiert werden muß, daß beim Abgang eines Benutzers eine entsprechende Rück- oder Umprogrammierung oder Löschung stattfinden muß, kurz gesagt, es ist ein nicht unerheblicher Arbeits- und Verwaltungsaufwand damit verbunden, der mit größter Genauigkeit durchgeführt werden muß, da es sich oftmals um Parameter handelt, deren falsche Einstellung nicht sofort mit der Inbetriebnahme erkannt werden kann, wodurch die Gesundheit der Patienten direkt betroffen ist.

Es ist aus der E 041 336 A eine Steuerung für numerisch programmierbare Werkzeugmaschinen (CNC-Maschinen) bekannt, bei der die Steuerung für eine gewünschte Arbeit nicht an der Maschine selbst programmiert wird, sondern an einem eigenen Arbeitsplatz und dann in geeigneter Form (Magnetdatenträger od.dergl.) zur Maschine gebracht und ihr eingespeist wird. Diese Programmierung ist aber dann wieder starr, d.h., daß die Bearbeitung eines Werkstückes nach Übertragung des Programmes vom Datenträger auf die Maschine automatisch abläuft, ohne daß der Betreiber daran etwas ändern kann und unterscheidet sich schon daher grundlegend von den medizinischen Geräten bzw. Arbeitsplätzen, auf die sich die Erfindung bezieht.

Die Erfindung bezweckt hier Abhilfe zu schaffen und eine Anordnung bzw. ein Verfahren anzugeben, mit der bzw. dem die oben genannten Probleme vermieden werden können.

Erfindungsgemäß wird dieses Ziel dadurch erreicht, daß jeder Benutzer eines derartigen Arbeitsplatzes seine persönlichen Einstellwerte für den Arbeitsplatz auf einem Datenträger, wie Magnetkarte, Chipkarte od.dgl. gespeichert hat, und daß jeder der Arbeitsplätze mit einer Lesevorrichtung für diesen Datenträger verbunden ist bzw. eine solche Lesevorrichtung aufweist, und die darauf gespeicherten Werte für die Einstellung lesen und aktivieren kann.

Auf diese Weise muß nur dafür gesorgt werden, daß die verschiedenen Arbeitsplätze mit einer entsprechenden Lesevorrichtung ausgestattet werden, was in Anbetracht der hohen Kosten der Arbeitsplätze und der geringen Kosten derartige Lesevorrichtungen weder logistische noch finanzielle Probleme mit sich bringt.

Die Speicherung der Daten selbst und die dabei verwendeten Datenformate sind nicht kritisch und können vom Fachmann in Kenntnis der Erfindung leicht ausgewählt oder adaptiert werden, wobei auf schon bestehende Datenerfassungssysteme Bedacht genommen werden kann. Derartige Systeme sind heute bereits verschiedentlich im Einsatz, um die Zugangsberechtigung, die Anwesenheit u.ähnl. zu erfassen bzw. zu überprüfen.

Bevorzugt sind die arbeitsplatzseitigen Lesevorrichtungen, zumindest bei einigen der Arbeitsplätzen keine reinen Lesevorrichtungen, sondern können auch Daten auf den Datenträger schreiben, so daß ohne zusätzlichen Datenerfassungs- oder Übertragungsaufwand Einstellungen des Arbeitsplatzes auf den individuellen Datenträger geschrieben werden können und somit auch bei anderen Arbeitsplätzen zur Verfügung stehen.

In einer Ausgestaltung können auch die während einer Behandlung erfaßten Behandlungswerte auf den individuellen Datenträger geschrieben werden und stehen so auf einfache Weise und vor allem frei von Übertragungsfehlern für das Patientenstammblatt zur Verfügung. Es ist, wenn die Patienten über eigene, ihnen zugeordnete Datenträger verfügen, wie es im Rahmen von Privatversicherungen bereits der Fall ist, auch möglich, diese Datenlese- und -schreibvorrichtungen dazu zu verwenden, entsprechende Daten auf die Datenträger des Patienten zu übertragen und so seine persönliche Krankheitsgeschichte auf dem laufenden zu halten.

Schließlich ermöglicht die Erfindung eine gänzlich neue Art und Weise des Erwerbes und Betriebes von Arbeitsplätzen, da beispielsweise ein oder mehrere erfindungsgemäß ausgerüstete Arbeitsplätze kostenlos oder gegen eine relativ geringe Grundzahlung einer Klinik od.dergl. zur Verfügung gestellt werden kann und die Zahlung der Betriebskosten und der Abschreibung über die entgeltlich zur Verfügung gestellten individuellen Datenträger erfolgt.

## Patentansprüche

1. Verfahren zur Einstellung der Betriebsparameter eines mehreren Benutzern zur Verfügung stehenden medizinischen Arbeitsplatzes, wie beispielsweise eines dentalen Bearbeitungsstuhls, dadurch gekennzeichnet, daß die Benutzer über einen jeweils ihnen zugeordneten externen Datenträger verfügen und der Arbeitsplatz über eine mit diesen Datenträgern kompatible Lesevorrichtung verfügt und daß die Betriebsparameter des jeweiligen Benutzers auf dem ihm zugeordneten Datenträger gespeichert sind und bei in das Lesegerät eingeführten Datenträger vom Arbeitsplatz erkennbar und aktivierbar sind.

2. Verfahren nach Anspruch 1, dadurch gekennzeichnet, daß zumindest einer der Arbeitsplätze mit einer mit dem persönlichen Datenträger kompatiblen Schreibvorrichtung versehen ist, um die vom Benutzer gewünschten bzw. zuletzt verwendeten Werte auf den ihm persönlich zugeordneten Datenträger schreiben zu können.

3. Verfahren nach Anspruch 2, dadurch gekennzeichnet, daß auch für die Behandlung spezifische Daten zur Ergänzung des Patientenstammblattes auf persönliche Datenträger des Benutzers und/oder Patienten geschrieben werden.
